# EUROPÄISCHE PATENTANMELDUNG

(11) **EP 3 522 338 A1**
(43) Veröffentlichungstag der Anmeldung: **07.08.2019**
(21) Anmeldenummer: 18154347.1
(22) Anmeldetag: 31.01.2018
(51) Int. Cl.: H02K 1/32, H02K 15/02

(54) **ROTOR MIT KÜHLKANÄLEN**

(71) Anmelder: Siemens Aktiengesellschaft, 80333 München (DE)
(72) Erfinder: Brenner, Robin, 94036 Passau (DE); Schönbauer, Norbert, 94072 Bad Füssing (DE)

(57) **Zusammenfassung**

Die Erfindung betrifft ein Blech (17) eines Rotors (5) einer rotatorischen dynamoelektrischen Maschine (1) mit zum Außenumfang gewandten Nuten (8), die am Umfang gleichmäßig verteilt sind, wobei nach einer vorgebbaren Anzahl von Nuten (8), in Umfangsrichtung betrachtet zumindest ein Einschnitt (9) vorgesehen ist, der in Umfangsrichtung betrachtet eine Breite von mindestens dem 1,25- fachen des Nutabstandes aufweist.

## Beschreibung

Die Erfindung betrifft ein Blech, ein Blechpaket, einen Rotors mit einem Blechpaket, eine dynamoelektrische Maschine mit einem Rotor, die Verwendung einer derartigen dynamoelektrischen Maschine bei einer Windkraftanlage und ein Verfahren zur Herstellung eines derartigen Rotors.

Bleche für dynamoelektrische Maschinen, insbesondere die von Motoren werden gestanzt ausgeführt und sind bei Rotoren von Asynchronmotoren derartig ausgeführt, dass an ihrem Außenumfang Nuten vorgesehen sind, in die dann im weiteren Verlauf der Herstellung des Rotors Leiter eingesetzt werden.

Um die Kühlung der Bleche respektive dieser Rotoren zu gewährleisten, sind insbesondere Luftkühlungen vorgesehen, so dass durch Kühlkanäle des Rotors und/oder am Rotor ein Kühlluftstrom geführt ist. Dadurch wird eine Luftkühlung des Rotors und damit auch der dynamoelektrischen Maschine bewirkt.

So ist es bekannt, bei Rotoren größerer Maschinen in vorgebbaren axialen Abständen radiale Kühlschlitze im Blechpaket des Rotors vorzusehen, indem der Rotor axial voneinander beabstandete Blechpakete aufweist. Dabei wird die Kühlluft über achsparallele Kühlkanäle durch das Blechpaket des Rotors geführt, wobei in vorgebbaren Abständen radiale Kühlluftschlitze der erwärmten Luft die Möglichkeit bieten, radial in Richtung Luftspalt der dynamoelektrischen Maschine auszutreten.

Ausgehend davon liegt der Erfindung die Aufgabe zugrunde, eine dynamoelektrische Maschine zu schaffen, die insbesondere einen ausreichend gekühlten Rotor, insbesondere für Asynchronkäfigläufer bereitstellt.

Die Lösung der gestellten Aufgabe gelingt durch ein Blech eines Rotors einer dynamoelektrischen Maschine mit zum Außenumfang gewandten Nuten, die am Umfang gleichmäßig verteilt sind, wobei nach einer vorgebbaren Anzahl von Nuten in Umfangsrichtung betrachtet zumindest ein Einschnitt vorgesehen ist, der in Umfangsrichtung betrachtet eine Breite von mindestens dem 1,25-fachen eines Nutabstandes aufweist.

Die Lösung der gestellten Aufgabe gelingt ebenso durch ein Blechpaket eines Rotors aufgebaut aus Blechen, wobei die Bleche in axialer Richtung nach einer vorgebbaren Anzahl von Blechen in eine Richtung um eine oder mehrere Nutbreiten gegeneinander versetzt angeordnet sind, so dass sich im Blechpaket schräg, insbesondere wendelförmiger verlaufende Kühlkanäle ergeben.

Die Lösung der gestellten Aufgabe gelingt ebenso durch einen Rotor, der aus erfindungsgemäßen Blechen aufgebaut ist.

Die Lösung der gestellten Aufgabe gelingt ebenso durch eine dynamoelektrische Maschine mit einem erfindungsgemäßen Rotor, der aus Blechen aufgebaut ist.

Ebenso gelingt die Lösung der gestellten Aufgabe durch eine Windkraftanlage mit einer dynamoelektrischen Maschine, insbesondere einem Generator, dessen Rotor luftgekühlt ist.

Ebenso gelingt die Lösung der gestellten Aufgabe durch ein Verfahren zur Herstellung eines Rotors einer rotatorischen Asynchronmaschine durch folgende Schritte:
- Bereitstellen eines Bleches mit zum Außenumfang gewandten Nuten, die am Umfang gleichmäßig verteilt sind, wobei nach einer vorgebbaren Anzahl von Nuten in Umfangsrichtung betrachtet zumindest ein Einschnitt vorgesehen ist, der in Umfangsrichtung betrachtet eine Breite von mindestens dem 1,25-fachen eines Nutabstandes aufweist,
- Axiales Anordnen der Bleche oder Teilblechpakete derart, dass sich ein oder mehrere schräg verlaufende Kühlkanäle im Rotor ergeben,
- Einsetzen von Leitern in die im Wesentlichen axial verlaufenden Nuten der Bleche und kontaktieren mit an den Stirnseiten des Rotors vorgesehenen Kurzschlussringen.

Durch die erfindungsgemäße Ausgestaltung von Blechen mit einem oder mehreren radialen Einschnitten, die in ihrer Breite auf jeden Fall breiter ausgelegt sind als ein Nutabstand, kann nunmehr durch axiales Stapeln dieser Bleche ein oder mehrere verdrillte oder geschrägte Kühlluftkanäle innerhalb eines Blechpakets eines Rotors bereitgestellt werden. Diese Kühlluftkanäle verlaufen von einer Stirnseite des Blechpakets zur anderen. Dies gelingt, indem nach jedem Blech oder nach einer vorgegebenen Anzahl von Blechen die jeweiligen Bleche respektive Teilblechpakete um eine Nutabstand oder ein Mehrfaches eines Nutabstandes in Umfangsrichtung gegeneinander versetzt angeordnet sind.

Der Nutabstand ist bei einem Rotor einer rotatorischen elektrischen Maschine insbesondere als Winkelversatz der zueinander versetzt angeordneten Bleche bzw. Teilblechpakete zueinander zu betrachten.

Die in Umfangsrichtung betrachtete Versetzung der Einschnitte um einen Nutabstand oder ein Mehrfaches eines Nutabstandes ist deshalb erforderlich, um die Leiter, insbesondere die Leiterstäbe in den im Wesentlichen axial fluchtend angeordnet Nuten des oder der Blechpakete des Rotors positionieren zu können.

Dabei sind dann die Leiter in ihrem axialen Verlauf, sofern sie im Bereich eines Einschnitts verlaufen, im Bereich dieses Einschnitts von Luft umgeben.

Um einen derart verlaufenden Kühlkanal in einem Rotor zu erhalten, muss der Einschnitt der Bleche eine dementsprechend Ausgestaltung in radialer Richtung und/oder in Umfangrichtung aufweisen.

Dabei ist notwendig dass zumindest ein radialer Abschnitt des Einschnitts eine Breite aufweist, die größer ist als der Nutabstand. Um einen angemessenen Luftstrom zu erhalten, soll diese Breite größer als das 1,25-fache des Nutabstandes sein. Idealerweise "fehlt" im Blech bzw. Blechpaket aufgrund des Einschnitts eine Nut und das diese Nut umgebende Material, so dass die Breite auch das 1,5 fache oder zweifache eines Nutabstandes betragen kann.

Die in Umfangsrichtung benachbarten Nuten des oder der Einschnitte des Blechs sollten dabei noch so viel umgebendes Material aufweisen, das eine ausreichende Flussführung eines bestromten Leiters im Blech gewährleistet ist.

Die radiale Tiefe des Einschnitts kann dabei - unter Berücksichtigung der mechanischen Festigkeit der Bleche bzw. Blechpakete - zwischen einem Bruchteil der Tiefe der Nut bis zu ca. 30% des Rotordurchmessers betragen.

Die Gestaltung der Einschnitte wird unter Berücksichtigung der oben ausgeführten Parameter bzgl. radialer Tiefe und/oder Breite des oder der Einschnitte u.a. durch die notwendige mechanische Festigkeit der Bleche bzw. des Blechpakets, durch die wärmetechnisch erforderliche Anzahl der Kühlkanäle und deren Querschnitt bestimmt.

Die Einschnitte sind beispielsweise in ihrer Breite radial nach innen verjüngend ausgeführt. Sie können aber auch andere Formen wie rechteckig oder tropfenförmig aufweisen. Entscheidend ist dabei immer, dass sich letztendlich im Blechpaket ein schräg verlaufender Kühlkanal ergibt.

Durch den erfindungsgemäßen Aufbau des oder der Blechpakete des Rotors erhält man wendelförmig oder zumindest schräg verlaufende Kühlluftkanäle im Blechpaket des Rotors. Dieser Rotor erzeugt im Betrieb der dynamoelektrischen Maschine eine Sogwirkung, die einen im wesentlichen axialen anströmenden Kühlluftstrom in das Blechpaket einsaugt, der dort von dem vorhandenen oder den vorhandenen Kühlkanälen geführt wird. Der oder die durch das Blechpaket geführten Kühlluftströme treten erwärmt auf der anderen Stirnseite aus dem Blechpaket aus.

Ebenso lässt sich der erfinderische Gedanke unter Berücksichtigung der oben ausgeführten Zusammenhänge auch für eine beidseitige Kühlung eines Rotors und einen dementsprechend gerichteten Kühlluftstrom einsetzen. Dabei weist die eine Hälfte des Rotorblechpakets einen Versatz der Einschnitte im Uhrzeigersinn und die andere Hälfte des Blechpakets einen Versatz der Einschnitte im Gegenuhrzeigersinn auf, was zu einer im wesentlichen V-förmigen Gestaltung der Kühlkanäle an der Oberfläche des Rotors führt.

Die Zusammenführung der Luftströme dieser im Wesentlichen gegensinnig verlaufenden Kühlluftströme ungefähr in der Mitte des Rotorblechpakets ist dort dann konstruktiv mit einem radialen Kühlschlitz auszuführen, der den zusammengeführten Luftstrom u.a. auch in einen Stator und/oder in den Luftspalt der dynamoelektrischen Maschine leitet.

Die Erfindung sowie vorteilhafte Ausgestaltungen der Erfindung werden anhand prinzipiell dargestellter Ausführungsbeispiele näher erläutert. Darin zeigen:
- FIG 1: einen prinzipiellen Längsschnitt einer dynamoelektrischen Maschine,
- FIG 2: einen Querschnitt eines Bleches,
- FIG 3: zwei Bleche hintereinander,
- FIG 4 bis 6: unterschiedliche Blechpakete,
- FIG 7: eine V-förmige Anordnung der Kühlkanäle,
- FIG 8: eine Windkraftanlage.

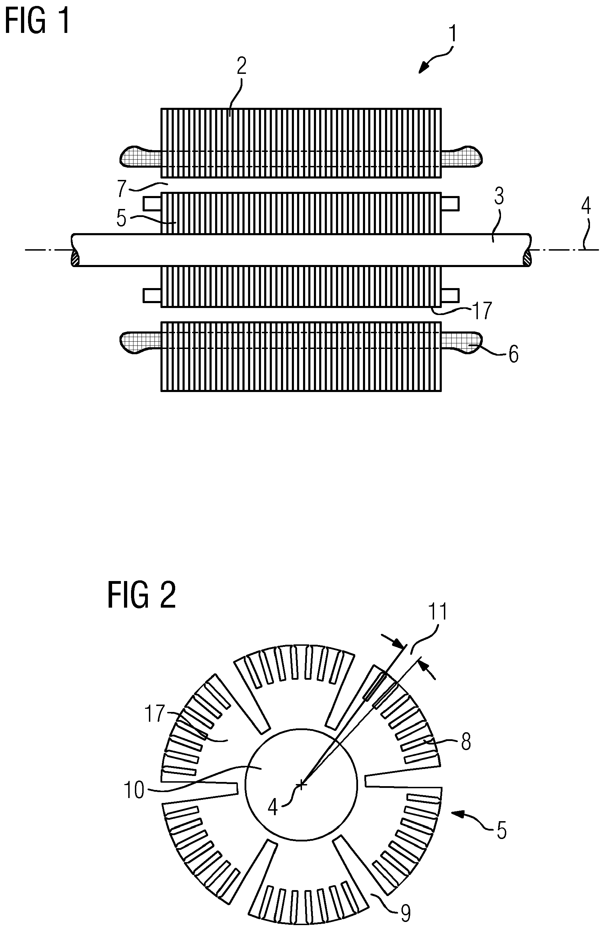

FIG 1 zeigt in einem prinzipiellen Längsschnitt eine dynamoelektrische rotatorische Maschine 1, in diesem Fall eine Asynchronmaschine mit einem Käfigläufer mit einem Stator 2 und einem Rotor 5, wobei Stator 2 und Rotor 5 jeweils geblecht ausgeführt sind. Stator 2 und Rotor 5 sind einem Luftspalt 7 voneinander getrennt. Durch elektromagnetische Wechselwirkung zwischen einem Wicklungssystem 6, das im Stator 2 angeordnet ist und beispielsweise einem Asynchronkäfigläufer im Rotor 5 wird eine elektromagnetische Wechselwirkung erzeugt, die eine mit dem Rotor 5 drehfest verbundene Welle 3 im motorischen Betrieb um eine Achse 4 in Bewegung setzt.

Im generatorischen Betrieb der dynamoelektrischen rotatorischen Maschine 1 wird die Welle 3 beispielsweise durch Windkraft angetrieben, was den Rotor 5 in Bewegung setzt und durch elektromagnetische Wechselwirkung mit dem Stator 2 elektrische Energie erzeugt wird.

Derartige Rotoren 5 bedürfen insbesondere bei einer Käfigläuferausführung einer besonderen Kühlung.

Aus Gründen der Übersichtlichkeit sind die Leiter bzw. Leiterstäbe und die Kurzschlussringe in den folgenden Darstellungen bei dem Rotor 5 weggelassen worden.

Um die Kühleffizienz zu steigern, wird erfindungsgemäß nunmehr das Blechpaket aus Blechen gemäß FIG 2 aufgebaut, wobei an dessen Außenumfang die Nuten 8 des Rotors 5 zu sehen sind, in denen später die Leiterstäbe des Käfigläufers einsetzbar sind. Nach einer vorgegebenen Anzahl von Nuten 8 sind jeweils Einschnitte 9 im Blech 17 vorgesehen, die in diesem Fall eine radiale Tiefe von ca. dem Zweifachen der Nuttiefe aufweisen. Die Breite dieser Einschnitte 9 ist größer oder gleich dem 1,2- oder 1,5-fachen des Nutabstandes der Nuten 8.

In einer Wellenbohrung 10 der Bleche 17 bzw. der Teilblechpakete wird später die Welle 3 drehfest angeordnet.

Der Abstand der Nuten 8 ist bei einem Rotor 5 einer rotatorischen elektrischen Maschine 1 insbesondere als Nutabstand 11 oder Winkelversatz 11 der zueinander versetzt angeordneten Bleche 17 bzw. Teilblechpakete zu betrachten.

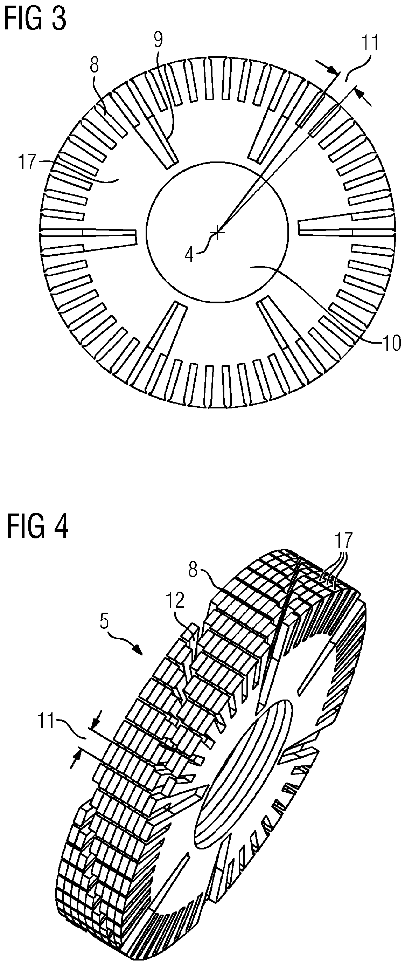

In FIG 3 ist angedeutet, wie durch Versatz zweier Bleche 17 nach FIG 2 ein sich leicht nach rechts drehender Kühlkanal ausbilden kann. Dabei sind die Bleche 17 durch einen Nutabstand 11 in Umfangsrichtung betrachtet gegeneinander versetzt angeordnet.

FIG 4 zeigt ein Blechpaket in perspektivischer Darstellung, wobei jedes Blech 17 vom axialen nachfolgenden Blech 17 um eine vorgegebenen Winkel, insbesondere einen Nutabstand 11 versetzt auf eine in dieser Darstellung nicht gezeigte Welle 3 positioniert wird. Die derartig angeordneten Bleche 17 oder Teilblechpakete bilden je nach Anzahl der Einschnitte 9 bei einem Blech 17 eine Vielzahl von geschrägt oder wendelförmig oder verdrillt verlaufenden Kühlkanälen 12 im Rotor 5.

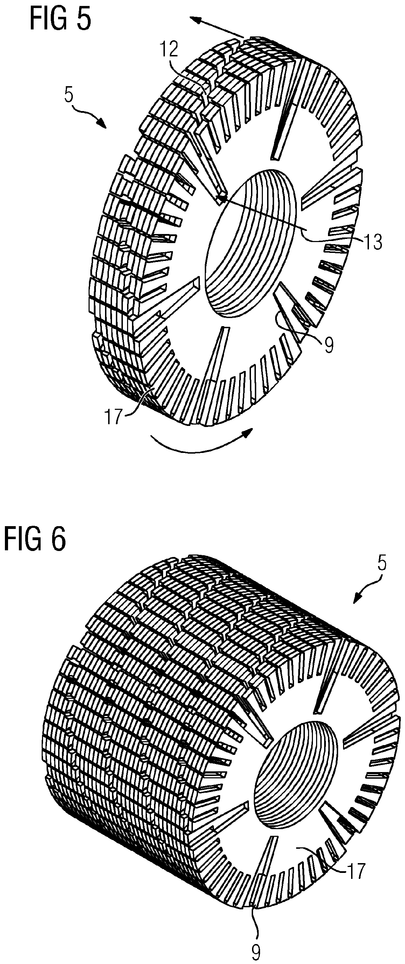

Durch die axial hintereinander angeordneten Bleche 17 bzw. Teilblechpakete mit einem jeweils vorgegebenen Versatz in Umfangrichtung stellt sich ein schräger Kühlkanal 12 ein. Durch Drehung des Rotors 5 im Betrieb der elektrischen Maschine 1 im Gegenuhrzeigersinn stellt sich, wie in FIG 5 prinzipiell dargestellt, aufgrund der damit verbundenen Sogwirkung ein Luftstrom 13 in die durch die Einschnitte 9 gebildeten Kühlkanäle 12 ein.

Die Einschnitte 9 sind in diesem Fall bzgl. ihrer Breite radial nach innen verjüngend ausgeführt. Sie können beispielsweise auch andere Formen wie rechteckig oder tropfenförmig aufweisen. Entscheidend ist dabei immer, dass sich letztendlich im Blechpaket ein schräg verlaufender Kühlkanal 12 ergibt.

Um einen Rotor 5 auch in die andere Richtung drehen lassen zu können, sollten auch Kühlkanäle mit einer dazu konträren Schrägung (d.h. der Winkelversatz der Bleche 17 erfolgt in die andere Richtung) vorhanden sein. Dies bildet dann auf der Oberfläche des Rotors 5 eine rautenförmige Struktur der Kühlkanäle 12 aus.

FIG 6 zeigt einen basierend auf FIG 4 und FIG 5 axial längeren Rotor 5, bei dem die Kühlkanäle 12 wendelförmig von der einen Stirnseite des Blechpakets des Rotors 5 zur anderen Stirnseite verlaufen.

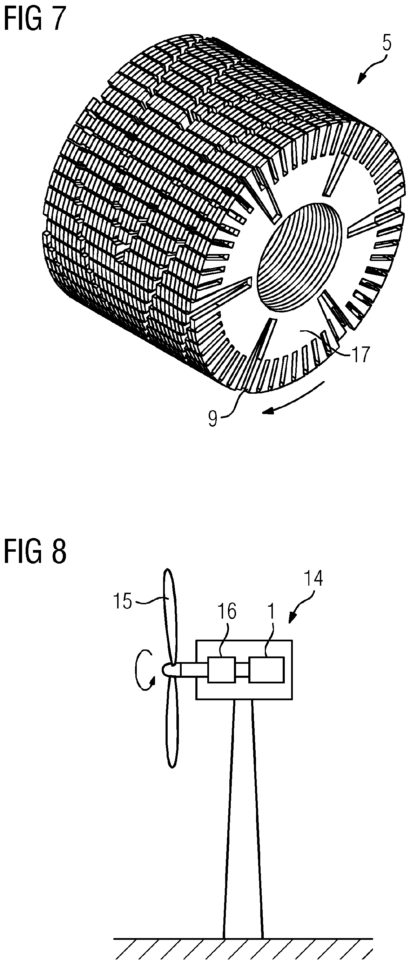

FIG 7 zeigt in einer weiteren Ausführungsform eine Möglichkeit, wie sowohl von der einen Stirnseite des Rotors 5 als auch von der anderen Stirnseite des Rotors 5 durch Drehung des Rotors 5 in eine Richtung - hier im Uhrzeigersinn - eine Sogwirkung erzeugt wird, die einen oder mehrere Luftströme sozusagen von beiden Stirnseiten in das Blechpaket des Rotors 5 saugt.

Diese Luftströme müssen natürlich das Blechpaket auch wieder verlassen können. Dies ist vorgesehen am Zusammentreffen der beiden von den Stirnseiten her zusammenführenden Kühlkanäle 12. Dies würde bei einer dynamoelektrischen Maschine 1 dazu führen, dass nunmehr ein mittig austretender Luftstrom aus dem Rotor 5 in den Luftspalt 7 der dynamoelektrischen Maschine 1 tritt. Dort kann dieser resultierende Luftstrom axial zu den Außenseiten der elektrischen Maschine 1 geführt werden. Er kann jedoch auch statt dessen oder ergänzend durch dementsprechend gestaltete radial verlaufende Kühlkanäle im Stator 2 radial nach außen geführt und dort rückgekühlt werden.

Die Bleche 17 zeigen Nuten 8 mit einem zum Luftspalt 7 der elektrischen Maschine 1 weisenden Nutschlitz. Der erfindungsgemäße Gedanke lässt sich auch bei Rotoren 5 realisieren, die als Käfigläufer für Asynchronmotoren ausgeführt sind mit zum Luftspalt 7 weisenden geschlossenen Nuten 8.

Der erfinderische Gedanke lässt sich auch in Rotoren 5 mit Permanentmagneten realisieren. Die Einschnitte 9 sind dabei in den Pollücken zwischen den Permanentmagneten und/oder radial unterhalb der Permanentmagnete angeordnet.

Derartige Rotoren 5 eignen sich für dynamoelektrische Maschinen 1 und auch für Windkraftgeneratoren, die mit oder ohne Getriebe 16 durch ein Rotorblatt antreibbar sind.

## Patentansprüche

1. Blech (17) eines Rotors (5) einer rotatorischen dynamoelektrischen Maschine (1) mit zum Außenumfang gewandten Nuten (8), die am Umfang gleichmäßig verteilt sind, wobei nach einer vorgebbaren Anzahl von Nuten (8), in Umfangsrichtung betrachtet zumindest ein Einschnitt (9) vorgesehen ist, der in Umfangsrichtung betrachtet eine Breite von mindestens dem 1,25-fachen des Nutabstandes (11) aufweist.

2. Blech (17) nach Anspruch 1, **dadurch gekennzeichnet, dass** der Einschnitt (9) eine maximale radiale Tiefe von ca. 1/3 des Außendurchmessers des Rotors (5) aufweist.

3. Blechpaket aufgebaut aus Blechen (17) nach einem der vorhergehenden Ansprüche, **dadurch gekennzeichnet, dass** die Bleche (17) in axialer Richtung nach einer vorgebbaren Anzahl von Blechen (17) in eine Richtung um eine oder mehrere Nutabstände (11) gegeneinander versetzt angeordnet sind, so dass sich im Blechpaket durch die sich daraus ergebende Anordnung der Einschnitte (9) schräg, insbesondere wendelförmig verlaufende Kühlkanäle (12) ergeben.

4. Blechpaket nach Anspruch 3, **dadurch gekennzeichnet, dass** die Kühlkanäle (12) sowohl im Uhrzeiger verdrillt angeordnet sind als auch im Gegenuhrzeiger verdrillt angeordnet sind, so dass der Verlauf der Kühlkanäle (12) auf der Oberfläche des Blechpakets ein rautenförmiges Muster bildet.

5. Rotor (5) mit zumindest einem Blechpaket nach Anspruch 3 oder 4, **dadurch gekennzeichnet , dass** der Rotor (5) durch Drehung um eine Achse (4) eine Sogwirkung in die Kühlkanäle (12) erzeugt.

6. Rotor (5) nach Anspruch 5, **dadurch gekennzeichnet, dass** zumindest zwei axial hintereinander angeordnete Blechpakete vorhanden sind, wobei zwischen den Blechpaketen radiale Kühlschlitze vorgesehen sind.

7. Dynamoelektrische Maschine (1), insbesondere einem Generator mit einem Rotor (5), der aus Blechen (17) gemäß der Ansprüche 3 oder 4 aufgebaut ist.

8. Windkraftanlage (14) mit einer dynamoelektrischen Maschine (1) nach Anspruch 7, insbesondere einem Generator, wobei zumindest dessen Rotor (5) luftgekühlt ist.

9. Verfahren zur Herstellung eines Rotors (5) nach Anspruch 5 oder Anspruch 6 einer rotatorischen Asynchronmaschine durch folgende Schritte:
- Bereitstellen eines Bleches (17) mit Nuten (8) und Einschnitten (9),
- Axiales Anordnen der Bleche (17) oder Teilblechpakete derart, dass sich ein oder mehrere schräg verlaufende Kühlkanäle (12) im Rotor (5) ergeben,
- Einsetzen von Leitern in die im Wesentlichen axial verlaufenden Nuten (8) der Bleche (7) und kontaktieren mit an den Stirnseiten des Rotors (5) vorgesehenen Kurzschlussringen.
